Europäisches Patentamt

European Patent Office

Office européen des brevets

(19)

(11) Veröffentlichungsnummer: **0 266 726**
**A2**

(12) # EUROPÄISCHE PATENTANMELDUNG

(21) Anmeldenummer: **87116110.5**

(22) Anmeldetag: **02.11.87**

(51) Int. Cl.⁴: **B60R 13/08 , G10K 11/16 , B32B 7/00**

(30) Priorität: **04.11.86 DE 3637548**

(43) Veröffentlichungstag der Anmeldung:
**11.05.88 Patentblatt 88/19**

(84) Benannte Vertragsstaaten:
**DE ES FR GB IT**

(71) Anmelder: **Chemiegesellschaft Gundernhausen mbH**
**Postfach 1120**
**D-6101 Rossdorf 2(DE)**

(72) Erfinder: **Ehrler, Peter, Dipl.-Ing.**
**Brensbacher Strasse 25**
**D-6101 Reinheim 2(DE)**
Erfinder: **Lukoschek, Klaus, Dipl.-Chem.**
**Am Kandelborn 15**
**D-6101 Reinheim(DE)**
Erfinder: **Roskothen, Hanns Jürgen, Dipl.-Ing. Dr.-Ing.**
**Rosdorfer Strasse 12a**
**D-6107 Reinheim-Zeilhard 5(DE)**

(74) Vertreter: **Harders, Gerhard, Dr.**
**Stettiner Strasse 2**
**D-6367 Karben 6(DE)**

(54) **Schallabsorptionsformteil und Verfahren zu seiner Herstellung.**

(57) Ein biegsames Formstück für die Luftschallabsorption in Kraftfahrzeugen besteht aus einem hochabsorbierenden offenporigen Formweichschaum, der von einem der Schallquelle abgewandten einseitig einliegenden verfestigten Träger getragen wird, wobei der Formschaum ausgesparte, zum Träger senkrecht stehende Vertiefungen aufweist. Der Formschaum enthält an der dem Träger gegenüberliegenden Seite aufgesetzte Stege, die kreuzweise angeordnet sind und quadratische bzw. rechteckige bzw. rautenförmige Kammern bilden.

Fig. 1

10   20   12   16   14

EP 0 266 726 A2

## SCHALLABSORPTIONSFORMTEIL UND VERFAHREN ZU SEINER HERSTELLUNG

Die vorliegende Erfindung betrifft ein biegsames Formteil für die Luftschallabsorption in Kraftfahrzeugen.

An der Unterseite von Motorhauben von Kraftfahrzeugen werden zur Absorption der Geräusche absorbierende Platten angebracht, die eine Verminderung der Geräuschbelästigung bewirken sollen. Solche Platten bestehen aus formstabilen Einheiten aus Filz oder Vliesmaterialien. Sie haben zwar eine gewisse absorbierende Wirkung, werden aber den immer mehr steigenden Anforderungen an den Leichtbau in Kraftfahrzeugen nicht gerecht und sind kompliziert herzustellen.

Aufgabe der vorliegenden Erfindung ist es, ein Formteil für die Luftschallabsorption in Kraftfahrzeugen zu schaffen, das eine verbesserte Luftschallabsorption bewirkt und darüber hinaus in möglichst wenigen Arbeitsgängen herstellbar ist.

Gelöst wird diese Aufgabe durch ein Formteil, das aus einem hochabsorbierenden offenporigen Formweichschaum besteht, der von einem der Schallquelle abgewandten einseitig einliegenden verfestigten Träger getragen wird, wobei der Formschaum ausgesparte, zur Glasfasermatte senkrecht stehende Vertiefungen aufweist.

Dabei ist das Formteil vorzugsweise so ausgebildet, daß es auf den Träger an der der Formweichschaumschicht gegenüberliegenden Seite Stege aufgesetzt sind, die kreuzweise angeordnet sind und beispielsweise quadratische, rechteckige oder rautenförmige Kammern bilden, die zur anliegenden Wand d.h. zu der dem Träger anliegenden Seite hin offen sind.

Als Träger dienen dünne Matten, Gewebe oder Gelege, wobei vorzugsweise solche Träger verwendet werden, die Zwischenräume in Form von Gitteröffnungen oder Maschen aufweisen, in die ein Formweichschaum eingeschäumt werden kann. Der Träger kann aus Glas, Metall, Kusntstoffen, Papier oder Pappe bestehen. Falls die trägereigene Formstabilität nicht ausreicht, um wärend der Verarbeitung eine hinreichende Formstabilität des Trägers zu gewährleisten, kann der Träger zusätzlich verfestigt werden, beispielsweise durch Verfestigen mit einem härtenden Kunststoff. Der Träger kann aber auch im Schäumwerkzeug durch geeignete Arretierungen so konturiert werden, daß er in Verbindung mit dem einzuschäumenden Material so verfestigt wird, daß er selbsttragend wird. Dadurch ist es möglich, den geometrischen Ort des Trägers im Formteil festzulegen.

Als besonders bevorzugt haben sich mit Kunststoffen verfestigte Glasfasermatten erwiesen.

Als Material für die Formweichschaumschicht eignen sich alle schäumbaren Kunststoffe. Bevorzugt wird Polyurethan-Weichschaum oder Polyvinylchlorid-Weichschaum verwendet.

Die Dicke der Formweichschaumschicht ist an sich nicht kritisch, sie wird im wesentlichen durch gewichtsmäßige Erwägungen sowie durch die räumlichen Gegebenheiten begrenzt. Es ist bekannt, daß die absorbierende Wirkung einer Formweichschaumschicht mit zunehmender Dicke zunimmt, so daß eine möglichst dicke Formweichschaumschicht erwünscht sein kann. Andererseits kann beispielsweise unter der Motorhaube von Kraftfahrzeugen der zur Verfügung stehende Platz begrenzt sein, so daß die Dicke der Formweichschaumschicht durch diese räumlichen Gegebenheiten und auch durch das relativ hohe Gewicht insbesondere dickerer Formweichschäume begrenzt wird. Im Lichte dieser Betrachtungen wird die Dicke der Formweichschaumschicht im allgemeinen etwa 5 bis 50 mm betragen, bevorzugt etwa 10 bis 30 mm. Dabei wird die Dicke cer Formweichschaumschicht ohne die Höhe der eventuell zusätzlich aufgebrachten Stege gemessen.

Die im Formweichschaum ausgesparten Vertiefungen können von zylindrischer, kegelförmiger, kegelstumpfförmiger, quaderförmiger, pyramidenförmiger oder pyramidenstumpfartiger Form sein. Die Vertiefungen können sich über die gesamte Dicke der Formweichschaumschicht erstrecken, ihre Tiefe kann aber auch geringer sein als die Dicke der Formweichschaumschicht. Bevorzugt ist, daß die Vertiefungen sich über die gesamte Dicke der Formweichschaumschicht bis zum Träger hin erstrecken. Es wurde jedoch festgestellt, daß beispielsweise in dem Fall, daß die Vertiefungen sich aus technischen Gründen nicht gänzlich bis zum Träger hin erstrecken können, keine wesentliche Verschlechterung der akustischen Eigenschaften auftritt.

Der Durchmesser der Vertiefungen beträgt im Mittel (z.B. bei kegelförmigen Vertiefungen) etwa 2 bis 40 mm, bevorzugt etwa 3 bis 20 mm. Es wurde gefunden, daß sich durch die Anbringung solcher Vertiefungen in der Weichschaumschicht die Absorption im Bereich von Frequenzen von etwa oberhalb 1000 Hz bis zur Hörgrenze wesentlich verbessern läßt, wobei dieser Effekt insbesondere bei mittleren Lochgrößen besonders ausgeprägt ist. Weitere, wenn auch nicht so ausgeprägte, Absorptionseffekte sind im Bereich der akustischen Schwingungen von etwa 200 bis etwa 1000 Hz möglich.

Neben dem Einfluß der Größe der Vertiefungen hat auch der Abstand der Vertiefungen einen wesentlichen Einfluß auf die Absorptionseigenschaften. Als Abstand der Vertiefungen soll dabei der Mindestabstand der Mittelpunkte zweier benachbarter Vertiefungen definiert werden. Der Abstand der Vertiefungen beträgt etwa 5 bis 120 mm, bevorzugt etwa 10 bis 70 mm. Es wurde gefunden, daß sich das Absorptionsverhalten des Formstücks durch solche Vertiefungen insbesondere im Schwingungsbereich oberhalb von 1000 Hz bis zur Hörgrenze wesentlich verbessern läßt. Dabei wurde beobachtet, daß im allgemeinen eine Verringerung des Abstandes eine Verbesserung des Absorptionsverhaltens mit sich bringt. Gelegentlich wurde auch bei kleineren Abstän den der Vertiefungen, etwa im Bereich von 20 bis 14 mm, und bei kleineren Durchmessern der Vertiefungen, beispielsweise bei 5 mm Durchmesser, auch noch Verbesserungen der akustischen Absorption im Bereich von etwa 250 bis 500 Hz gefunden. Eine weitere Verbesserung der akustischen Absorption des Formstücks läßt sich durch Variierung des Abstandes zur anliegenden Wand erhalten, was beispielsweise durch Stege bewirkt werden kann, die auf die Formweichschaumschicht aufgesetzt werden. Diese Stege können von quadratischem, rechteckigen, dreieckigem oder auch trapezförmigen Querschnitt sein. Wenn die Stege gemeinsam mit der Formweichschaumschicht zusammenhängend ausgeschäumt werden, ist es bevorzugt, daß die Stege einen trapezförmigen Querschnitt aufweisen.

Der Träger kann in Form einer planaren Matte und dergl. umschäumt werden, so daß die Stege außerhalb des Trägers liegen. Der Träger kann aber auch in die Konturierung der Stege einbezogen werden und liegt dann an der Oberseite des gesamten Formteils einschließlich der Stegoberseiten. Durch eine solche Anordnung wird eine zusätzliche Versteifung des gesamten Formteils erhalten.

Obwohl auch Formstücke, bei denen die Formweichschaumschicht unmittelbar an der Wand des Fahrzeuges, beispielsweise der Motorhaube, anliegt, bereits einen gegenüber den Stand der Technik verbesserten Absorptionseffekt aufweisen, läßt sich die Absorptionseffekt noch steigern, wenn die Formweichschaumschicht einen gewissen Wandabstand aufweist. Demgemäß kann die Höhe der Stege 0 bis 200 mm betragen, bevorzugt 10 bis 150 mm. Insbesondere beträgt die Höhe der Stege etwa 3 bis 100 mm.

Gegenüber der Ausführungsform ohne Stege wird durch die Anbringung der Stege das Absorptionsverhalten insbesondere im mittleren und unteren Frequenzbereich verbessert. Diese Verbesserung ist bei Frequenzen von etwa 1250 Hz abwärts bis zur Hörgrenze zu beobachten. Bei kleineren Steghöhen, beispielsweise bei einer Steghöhe von etwa 5 mm, lassen sich kleinere, aber doch feststellbare Verbesserungen des akustischen Absorptionsverhaltens im Frequenzbereich von etwa 2000 bis 80 Hz beobachten. Bei größeren Steghöhen, beispielsweise im Bereich von etwa 10 bis 15 mm, ergeben sich wesentliche Verbesserungen des Absorptionsverhaltens in einem Bereich von etwa 1250 bis 250 Hz. Bei größeren Steghöhen, beispielsweise bei einer Steghöhe von etwa 40 mm, verschiebt sich das Maximum der Absorptionswirkung in den tieferen Bereich von etwa 600 bis 100 Hz. Dabei sind auch noch im Bereich bis zur unteren Hörgrenze beachtenswerte Verbesserungen zu beobachten.

Neben der Höhe der Stege hat auch die Entfernung der einzelnen Stege voneinander bzw. die Stegdichte, einen Einfluß auf das akustische Absorptionsverhalten. Beispielsweise bei einer quadratischen oder rechteckigen Anordnung der Stege beobachtet man bei gleichbleibender Steghöhe eine Zunahme der akustischen Absorption bei abnehmendem Abstand der einzelnen Stege. Der Stegabstand kann etwa 30 bis 500 mm betragen, bevorzugt etwa 50 bis 300 mm und insbesondere etwa 100 bis 200 mm. Bei diesen Stegabständen wird die Absorptionswirkung, die durch die Steghöhe hervorgerufen wird, noch zusätzlich verbessert Dabei ist bei den angegebenen Stegabständen insbesondere eine Verbesserung der Absorption im Bereich unterhalb von 100 Hz zu beobachten, die sich in Verbindung mit größeren Steghöhen noch in tiefere Bereiche bis zur unteren Hörgrenze verschiebt. Außerdem ist eine Verbesserung der akkustischen Absorption im Bereich von etwa 500 Hz bis zu etwa 800 bis 1000 Hz zu beobachten. Eine nicht ganz so ausgeprägte Verbesserung des akustischen Absorptionsverhaltens findet sich weiterhin auch noch bei Frequenzen oberhalb von etwa 5000 Hz.

Entsprechend den vom Fahrzeug ausgehenden Geräuschen und damit den zu abosrbierenden Frequenzen läßt sich durch die erfindungsgemäße Kombination von Maßnahmen über das gesamte Frequenzband eine gleichmäßige Absorption bzw. eine gezielte Absorption der Frequenzen, die - schallpegel-bestimmend sind, erreichen. Die Erfindung ermöglicht somit eine gezielte Anpassung bzw. Auslegung eines selbsttragenden Absorbers im Hinblick auf das Frequenzband eines Schallintensitätsspektrums.

Dies wird erreicht durch eine Variation der Dicke der Formweichschaumschicht, der Anzahl und Geormetrie bzw. des Abstandes der Vertiefungen, der Höhe der Stege und damit der Variierung des Wandabstandes sowie eine Segmentierung des durch die Stege hervorgerufenen Hohlraums zwischen der Fahrzeugwand bzw. dem Karrosserieblech und dem Absorber. Insbesondere sind hierbei verschäumte bzw. einteilig verschäumte Formteile vorteilhaft, die eine gleichmäßige Dichteverteilung bei geringer Dichte aufweisen, was akustisch relevant ist.

Ein Verfahren zur Herstellung des Schallabsorptionsformstückes besteht darin, daß der Träger in der gewünschten Konturierung zunächst mit einem härtbaren Material verfestigt wird und anschließend der Formweichschaum in der gewünschten Ausgestaltung, gegebenenfalls mit den Stegen, auf die Träger aufgeschäumt wird. Es ist aber beispielsweise auch möglich, den Träger durch die Gestaltung der Schäumform zunächst lediglich zu konturieren und dann durch Einschäumen beispielsweise eines PUR-Schaumes die Verfestigung des Trägers und die Aufschäumung der Weichschaumschicht, gegebenenfalls mit den Stegen, in einem einzigen Arbeitsgang durchzuführen. Diese Möglichkeit ist wegen des einfachen Verfahrensablaufs besonders bevorzugt.

Es ist nicht erforderlich, daß das Schalldämpfungsformstück z.B. an der Unterseite der Motorhaube völlig plan anliegt, vielmehr kann es vorteilhaft sein, daß das Schallabsorptionsformteil bereichsweise in Abständen von der Motorhaube angeordnet ist, wobei die Abstände auch unterschiedlich sein können. Dies kann beispielsweise durch die auf das Formteil aufgesetzten Stege bewirkt werden. Dabei werden zwischen der Unterseite der Motorhaube und der Formweichschaumschicht Hohlräume gebildet, die eine zusätzliche schallabsorbierende Funktion ausüben.

Die als Träger vorzugsweise verwendeten Glasfasermatten sind zur Verbesserung der mechanischen Eigenschaften von Kunststoffteilen bekannt. Vorzugsweise werden Glasfasermatten mit niedrigen Flächengewichten verwendet, beispielsweise in der Größenordnung von 50 bis 300 g pro Quadratmeter, bevorzugt in der Größenordnung von 150 bis 225 g pro Quadratmeter.

Es lassen sich aber auch andere Träger verwenden, beispielsweise dünne biegsame Metallgitter oder andere Materialien, aus denen Matten, Gewebe oder Gelege hergestellt werden können.

Wenn der Träger in die gewünschte Form gebracht worden ist, wird er in dieser Form verfestigt, beispielsweise durch Behandlung mit einem härtenden Kunststoff oder durch geeignete Arretierung in der Ausschäumform. Für eine Kunststoffbehandlung eignen sich beispielsweise alle vernetzenden Kunststoffe, Duromere oder Elastomere. Dabei ist es bevorzugt, daß die Kunststoffbehandlung so erfolgt, daß der Träger zwar verfestigt wird, daß er aber für den aufzubringenden Formweichschaum noch durchdringbar bleibt.

Auf den verfestigten Träger wird dann einseitig eine Schicht aus einem hochabsorbierenden Formweichschaum aufgebracht. Verfahren zum Formschäumen sind bekannt. Als hochabsorbierende offenporige Formschäume können beispielsweise Polyurethanschäume oder Polyvinylchloridschäume dienen.

Die im Formschaum senkrecht zum Träger sich erstreckenden Vertiefungen können bei einer entsprechenden Ausbildung der Ausschäumform bereits beim Schäumvorgang gebildet werden. Ebenso können auch die auf der Formweichschaumschicht befindlichen Stege beim Schäumvorgang mit ausgeschäumt werden. Sie können aber auch nachträglich auf die fertige Formweichschaumschicht aufgesetzt und befestigt werden, beispielsweise mit einem Haftmittel.

Insbesondere durch die Kombination der genannten Konstruktionsmerkmale einschließlich der Vertiefungen und Stege wird ein über einen weiten Bereich gleichmäßiger Schallabsorptionsgrad erhalten, der mit nur geringen Schwankungen den gesamten Frequenzbereich von der unteren bis zur oberen Hörgrenze und insbesondere einen Bereich von etwa 500 Hz bis zu mehreren tausend Herz umfaßt. Dadurch wird eine überdurchschnittliche Schallabsorption der Geräusche aus dem Motorraum erzielt.

Die Erfindung wird nachfolgend in der Figurenbeschreibung anhand der Zeichnungen beispielhaft näher erläutert, wobei alle in der Figurenbeschreibung enthaltenen Merkmale als erfindungswesentlich angesehen werden.

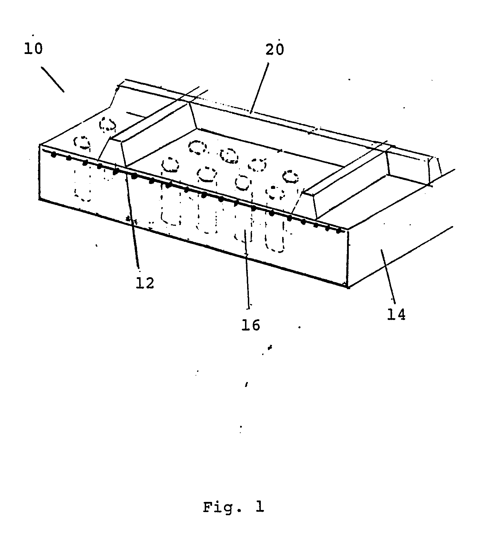

Figur 1    zeigt einen Schnitt durch eine perspektivische Darstellung eines Schallabsorptionsformteiles;

Figur 2    zeigt einen Schnitt durch eine perspektivische Darstellung einer weiteren Ausführungsform eines Schallabsorptionsformteiles.

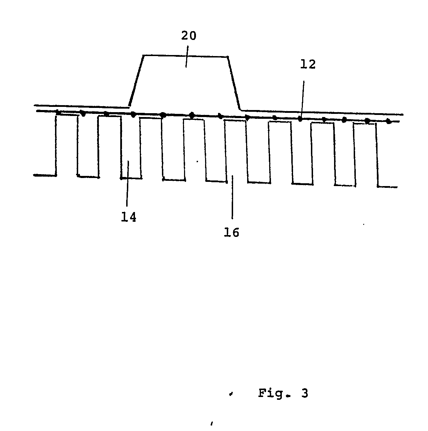

Figur 3    zeigt eine schematische Darstellung eines Schallabsorptionsformstückes im Schnitt,

Figur 4    zeigt die Schallpegelminderung beim Vergleich einer ungelochten mit einer gelochten Platte;

Figur 5    zeigt die Schallpegelminderung im Vergleich einer gelochten Platte ohne Wandabstand mit einer gelochten Platte mit 30 mm Wandabstand; (Durchmesser der zylindrischen Vertiefungen 10 mm)

Figur 6    zeigt die Schallpegelminderung im Vergleich einer gelochten Platte mit Wandabstand ohne Segmentierung durch Stege mit einer gelochten segmentierten Platte mit dem gleichen Wandabstand.

Das Schallabsorptionsformteil 10 besteht aus einem Träger 12 in Form einer planaren Glasfasermatte mit einem Flächengewicht von ca. 150 g pro m², auf das eine Formweichschaumschicht 14 einseitig aufgeschäumt ist. In der Formweichschaumschicht 14 befinden sich Vertiefungen 16, die eine zylindrische Form aufweisen und die einen Durchmesser von 10 mm aufweisen. Der Lochabstand beträgt 20 mm bei einer regelmäßigen quadratischen Lochanordnung. Auf die Formweichschaumschicht 14 sind Stege 20 aufgeschäumt, die einen trapezförmigen Querschnitt aufweisen. Die Steghöhe beträgt 25 mm, die Dicke der Formweichschaumschicht 20 mm.

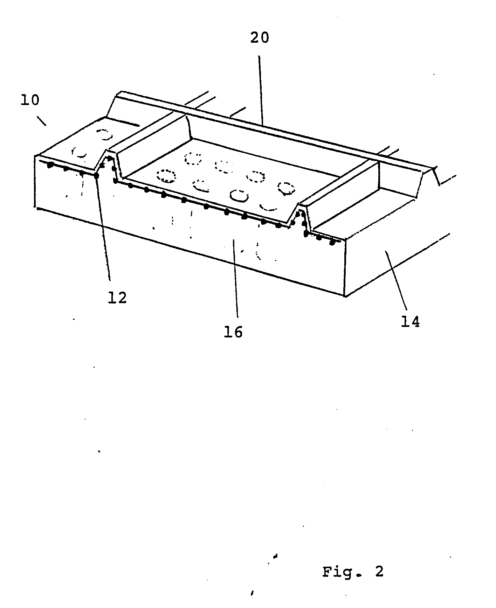

In einer weiteren in Fig. 2 gezeigten Ausführungsform ist die Glasfasermatte in Form der Stegoberflächeen konturiert und bildet über die gesamte Oberfläche des Formteils die obere Fläche, wodurch das Formteil zusätzlich versteift wird.

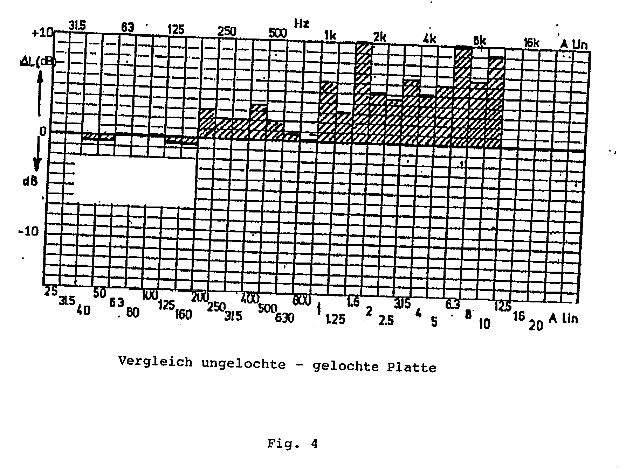

Die folgenden Figuren 4 bis 6 zeigen einen Vergleich zwischen einer ungelochten Platte, wie sie dem Stand der Tech nik entspricht, und einer gelochten Platte, sowie zwischen einer gelochten Platte ohne Wandabstand und einer gelochten Platte mit Wandabstand und außerdem zwischen einer gelochten Platte mit Wandabstand ohne Segmentierung durch aufgesetzte Stege und einer gelochten Platte mit Segmentierung durch aufgesetzte Stege. Es wird die Schallpegelminderung L (dB) dargestellt, die durch Absorption in Abhängigkeit von der Frequenz erhalten wird. Dabei zeigt die Fig. 4 einen Vergleich der ungelochten Platte mit der gelochten Platte, wobei folgende Parameter verwendet wurden:

Schaumdicke      20 mm
Lochdurchmesser      10 mm (Anordnung quadratisch)
Lochabstand      20 mm
Wandabstand      0 mm
Positive Werte ≙ Verbesserung der Absorption durch Lochung.

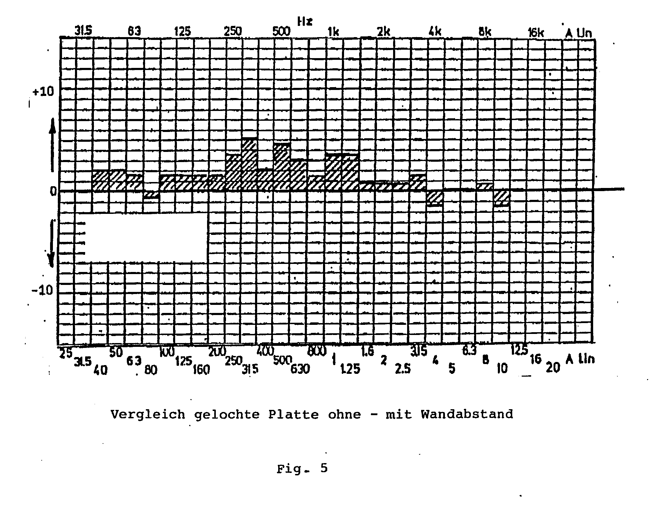

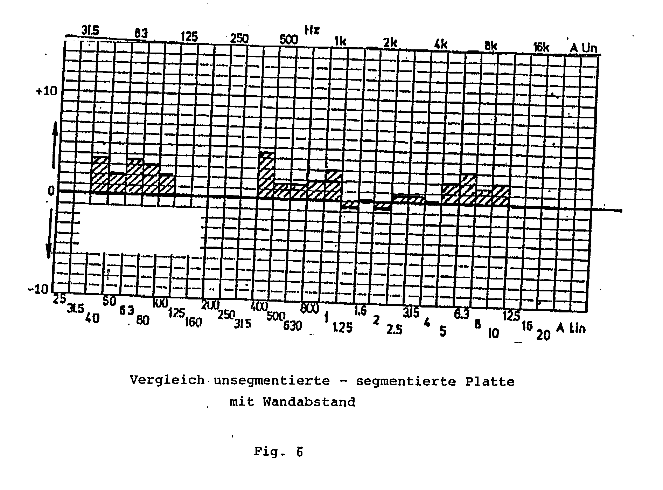

Die Fig. 5 zeigt einen Vergleich der gelochten Platte ohne Wandabstand mit der gelochten Platte mit 30 mm Wandabstand.

Parameter siehe Fig. 4
Positive Werte ≙ Verbesserung der Aborption durch Wandabstand.

Die Fig. 6 zeigt einen Vergleich der gelochten Platte mit Wandabstand (30mm) ohne Segmentierung mit der gelochten, segmentierten Platte mit Wandabstand durch augesetzte Stege.

Rippenabstand      150 mm (Segmente quadratisch)
Parameter siehe Fig. 4.
Positive Werte ≙ Verbesserung der Absorption durch Segmentierung.

Den Figuren ist deutlich entnehmbar, daß bereits eine Anordnung mit zylindrischen Vertiefungen eine bedeutende Verbesserung des Schallabsorptionsverhaltens im Bereich ober halb von 1000 Hz ergibt. Darüber hinaus ist im Bereich von etwa 200 bis 500 Hz eine nicht ganz so ausgeprägte, aber doch noch beträchtliche Verbesserung bemerkbar.

Der Figur 5 ist entnehmbar, daß die gelochte Platte ein noch besseres Schallabsorptionsverhalten zeigt, wenn ein Wandabstand von 30 mm eingehalten wird. Dabei ist eine Verbesserung des Absorptionsverhaltens im Bereich von etwa 1250 Hz bis 250 Hz festzustellen. Eine weniger ausgeprägte Verbesserung des Schallabsorptionsverhaltens findet sich im Bereich von etwa 250 bis herab zur unteren Hörgrenze.

Wie der Figur 6 entnehmbar ist, wird das Schallabsorptionsverhalten durch Stege, die kreuzweise angeordnet sind und eine Segmentierung ergeben, weiter verbessert. Ausgeprägte Verbesserungen finden sich im Bereich von etwa 100 Hz bis herab zur Hörgrenze und im Bereich von 400 bis 1000 Hz. Außerdem findet sich im Bereich von 5000 bis etwa zur oberen Hörgrenze eine weitere Verbesserung des Schallabsorptionsverhaltens.

Den oben diskutierten Figuren ist entnehmbar, daß die Schallabsorptionsformteile der vorliegenden Erfindung eine beachtliche Verbesserung des Schallabsorptionsverhaltens über den gesamten akustischen Frequenzbereich ermöglichen. Darüber hinaus bieten sie die Möglichkeit, durch gezielte Anwendung einzelner der geschilderten Parameter entsprechend den akustischen Gegebenheiten, beispielsweise im inneren eines Kraftfahrzeugs, insbesondere unter Motorhauben, aber auch in Dachhimmeln, motorseitigen Kotflügelabdeckungen, Motorkapselungen und dergleichen eine gezielte Absorptions der Schallpe gel-bestimmenden Frequenzbereiche der Schallabsorptionsformteile zu erreichen.

**Ansprüche**

1. Selbsttragendes biegsames Formteil für die Luftschallabsorption in Kraftfahrzeugen, **dadurch gekennzeichnet**, daß es aus einem hochabsorbierenden offenporigen Formweichschaum besteht, der von einem der Schallquelle abgewandten einseitig einliegenden verfestigten Träger getragen wird, wobei der Formschaum ausgesparte, zum Träger senkrecht stehende Vertiefungen aufweist.

2. Formteil nach Anspruch 1, **dadurch gekennzeichnet** , daß der Träger aus einer Matte, einem Gewebe oder einem Gelege besteht.

3. Formteil nach Anspruch 2, **dadurch gekennzeichnet**, daß der Träger aus einer Glasfasermatte, einem Glasfasergewebe oder einem Glasfasergelege besteht.

4. Formteil nach Anspruch 1, **dadurch gekennzeichnet**, daß die Vertiefungen sich durch die gesamte Dicke des Formschaums erstrecken.

5. Formteil nach Anspruch 1, **dadurch gekennzeichnet**, daß auf den Träger an der der Formweichschaumschicht gegenüberliegenden Seite Stege auf gesetzt sind, die kreuzweise angeordnet sind und quadratische bzw. rechteckige bzw. rautenförmige Kammern bilden.

6. Formteil nach Anspruch 1, **dadurch gekennzeichnet**, daß die Vertiefungen einen Durchmesser von etwa 2 mm bis 40 mm aufeisen.

7. Formteil nach Anspruch 1, **dadurch ge kennzeichnet**, daß die Vertiefungen einen Abstand von etwa 5 mm bis 120 mm aufweisen.

8. Formteil nach Anspruch 1, **dadurch gekennzeichnet**, daß der Formweichschaum eine Dicke von etwa 5 mm bis 50 mm aufweist.

9. Formteil nach den Ansprüchen 1 und 5, **dadurch gekennzeichnet**, daß die Stege eine Höhe von etwa 0 bis 200 mm aufweisen.

10. Formteil nach den Ansprüchen 1 und 5, **dadurch gekennzeichnet**, daß die Stege einen Abstand von etwa 30 mm bis 500 mm voneinander aufweisen.

11. Verfahren zur Herstellung des Formteils nach den vorhergehenden Ansprüchen, **dadurch gekennzeichnet**, daß der Träger mit einem härtbaren Material verfestigt und der Formweichschaum in der gewünschten Ausgestaltung, gegebenenfalls mit den Stegen, auf den Träger aufge-schäumt wird.

Fig. 1

Fig. 2

Fig. 3

Vergleich ungelochte - gelochte Platte

Fig. 4

Vergleich gelochte Platte ohne – mit Wandabstand

Fig. 5

Vergleich unsegmentierte – segmentierte Platte
mit Wandabstand

Fig. 6